# EUROPEAN PATENT APPLICATION

(11) **EP 3 229 523 A1**
(43) Date of publication of application: **11.10.2017**
(21) Application number: 15865274.3
(22) Date of filing: 30.11.2015
(51) Int. Cl.: H04W 28/16, H04W 92/20

(54) **METHOD FOR REDUCING UPLINK INTERFERENCE, AND BASE STATION**

(30) Priority: 05.12.2014 JP 2014247189
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2015/083623
(87) International publication number: WO 2016/088719

(57) **Abstract**

An uplink interference reduction method executed in a radio communication system which includes a connected base station, and an interference base station to which an interference user apparatus transmitting an interference signal with respect to the connected base station is connected, includes control information transmission step, transmitting to the connected base station by the interference base station, control information used for reducing the interference signal at the connected base station, and interference reduction step reducing, by the connected base station, the interference signal using the control information, to acquire a desired signal transmitted from a user apparatus that is connected to the connected base station.

## Description

### TECHNICAL FIELD

The present invention relates to a technique to perform an uplink interference reduction process in a radio communication system.

### BACKGROUND ART

In the radio communication system such as the LTE (Long Term Evolution) and the like, a base station (eNB) forms a cell, and a user apparatus (UE) communicates while residing in the cell.

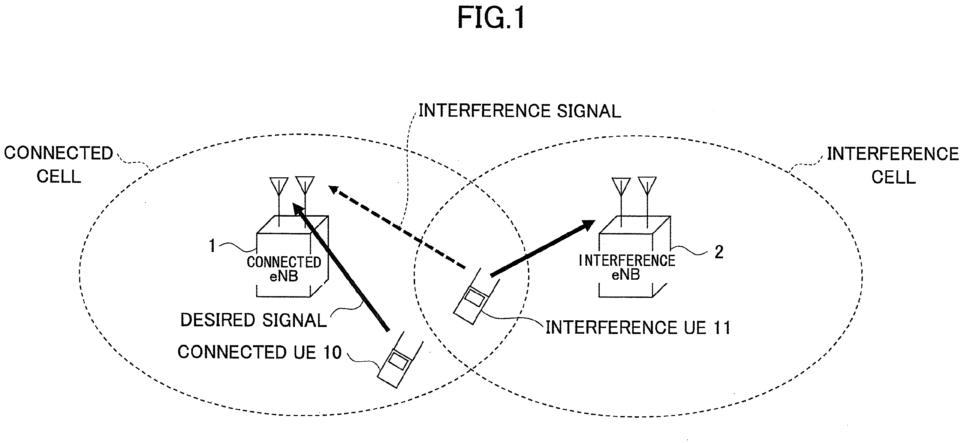

Here, as illustrated in FIG. 1, a case is considered in which a base station 1 (referred to as connected base station 1) and a base station 2 (referred to as interference base station 2) are adjacent to each other, a user apparatus 10 (referred to as connected user apparatus 10) resides within a cell of the connected base station 1, a user apparatus UE11 (referred to as interference user apparatus 11) resides within a cell (interference cell) of the interference base station 2, and the interference user apparatus 11 is positioned in a vicinity of a boundary of the connected cell and the interference cell.

In this case, an uplink signal received by the connected base station 1 from the interference user apparatus 11, becomes an interference signal in the uplink of the connected base station 1. Such an interference signal deteriorates a user throughput in the uplink.

### PRIOR ART DOCUMENTS

### NON-PATENT DOCUMENTS

Non-Patent Document 1: Axnas J. et al., "Successive Interference Cancellation Techniques for LTE Downlink", PIMRC 2011
Non-Patent Document 2: 3GPP TS36.211 V8.8.0
Non-Patent Document 3: 3GPP TS36.212 V8.8.0

### DISCLOSURE OF THE INVENTION

### PROBLEM TO BE SOLVED BY THE INVENTION

In order to improve the user throughput in the uplink, it is important to reduce the interference signal from the interference user apparatus 11 at the connected base station 1.

As one technique to separate and acquire a desired signal from a reception signal that includes the interference signal and the desired signal, there is a technique called IRC (Interference Rejection Combining). The IRC is a technique that estimates a channel of the interference signal, and applies a weighting (MMSE criterion reception weight) to a signal received by each reception antenna. The IRC includes type 1 that generates the MMSE criterion reception weight in this manner, and another type 2 that estimates correlation information of the interference signal from a pilot of the desired signal. The type 1 has a higher interference rejection capability, however, the type 1 requires the channel estimation of the interference signal.

As a technique other than the IRC, there is a technique called SIC (Successive Interference Cancellation) that separates the desired signal from the reception signal including the interference signal and the desired signal (for example, refer to Non-Patent Document 1).

The SIC is a technique that creates a replica signal by a hard decision or a soft decision of the interference signal from the reception signal, and successively subtracts (cancels) the replica signal from the reception signal in order to extract the desired signal. For every plurality of interference signals, the SIC performs the channel estimation of the interference signal, demodulates the interference signal based on the channel estimation, creates the replica of the interference signal, and successively subtracts the replica from the reception signal.

Further, as another example that performs the interference reduction, there is a ML (Maximum Likelihood) estimation technique. In the ML estimation, an MLD (Maximum Likelihood Detector) of the user apparatus performs the channel estimation with respect to the desired signal and the interference signal, and simultaneously extracts (simultaneously detects) the signals. In order to perform the simultaneous detection, the MLD calculates the likelihood for combinations of all signal points of the desired signal and the interference signal, and regards the combination of the signal points having the highest likelihood as the signal transmitted from each base station. The ML estimation calculates a Euclidian distance between a reception signal expected from a certain combination of the signal points and actual reception signals, and, regards, from amongst the combinations of all of the signal points, a combination having a shortest distance from the actual reception signal (=having a highest likelihood) as the transmission signal. Accordingly, the interference signal may also be canceled using the ML estimation technique.

In order to use the interference reduction technique described above in the connected base station 1, and execute an interference reduction process on the interference signal arriving from the interference user apparatus 11 in the interference cell, it is necessary to perform the channel estimation and the like of the interference signal in the uplink. However, because the connected base station 1 cannot recognize the control information at the interference cell end, there are problems in that the connected base station cannot perform the channel estimation and the like of the interference signal, and the interference reduction process cannot be appropriately performed for the uplink.

The present invention is conceived in view of the above, and one object is to provide a technique that enables the base station of the radio communication system to appropriately perform the interference reduction process with respect to the interference signal transmitted from the user apparatus in the interference cell.

### MEANS OF SOLVING THE PROBLEM

According to one embodiment of the present invention, an uplink interference reduction method executed in a radio communication system which includes a connected base station, and an interference base station to which an interference user apparatus transmitting an interference signal with respect to the connected base station is connected, includes
control information transmission step, transmitting to the connected base station by the interference base station, control information used for reducing the interference signal at the connected base station; and
interference reduction step reducing, by the connected base station, the interference signal using the control information, to acquire a desired signal transmitted from a user apparatus that is connected to the connected base station.

In addition, according to one embodiment of the present invention, a base station used as a connected base station in a radio communication system which includes the connected base station, and an interference base station to which an interference user apparatus transmitting an interference signal with respect to the connected base station is connected, includes
a control information reception part that receives, from the interference base station, control information used for reducing the interference signal at the connected base station; and
an interference reduction processor that reduces the interference signal using the control information, to acquire a desired signal transmitted from a user apparatus that is connected to the connected base station.

### EFFECTS OF THE INVENTION

According to embodiments of the present invention, the base station of the radio communication system can appropriately perform the interference reduction process with respect to the interference signal transmitted from the user apparatus in the interference cell.

### BRIEF DESCRIPTION OF THE DRAWING

FIG. 1 is a diagram for explaining interference in an uplink.
FIG. 2 is a schematic diagram of a configuration of a radio communication system in one embodiment of the present invention.
FIG. 3 is a diagram illustrating an example of a configuration of an SIC receiver.
FIG. 4 is a diagram for explaining a PUSCH.
FIG. 5 is a diagram for explaining a DMRS.
FIG. 6A is a diagram for explaining the DMRS.
FIG. 6B is a diagram for explaining the DMRS.
FIG. 7 is a diagram for explaining a group hopping of the DMRS.
FIG. 8 is a diagram for explaining a procedure of the PUSCH.
FIG. 9 is a diagram illustrating a UCI multiplexed to a PUSCH.
FIG. 10A is a diagram for explaining a frequency hopping in the PUSCH.
FIG. 10B is a diagram for explaining the frequency hopping in the PUSCH.
FIG. 11 is a diagram for explaining a TTI bundling.
FIG. 12 is a diagram for explaining a phase rotation amount α.
FIG. 13 is a diagram illustrating information included in a DCI format 0.
FIG. 14 is an operation example of a case in which a downlink data (PDSCH) and a UL scheduling grant (DCI format 0) are transmitted simultaneously.
FIG. 15 is an operation example of a case in which the PUSCH and a periodic CSI feedback occur simultaneously.
FIG. 16 is an operation example of a case in which the PUSCH and an aperiodic CSI feedback are scheduled.
FIG. 17 is a diagram illustrating information required for uplink interference canceling.
FIG. 18 is a block diagram schematically illustrating a configuration of a base station in one embodiment of the present invention.
FIG. 19 is a block diagram illustrating a configuration of each apparatus in one embodiment of the present invention.
FIG. 20 is a diagram of a HW configuration of a user apparatus UE.
FIG. 21 is a diagram of a HW configuration of a base station eNB.
FIG. 22 is a sequence diagram of a case in which all information is dynamically notified for every subframe.
FIG. 23 is a sequence diagram of a case in which a part of the information is semi-statically notified, and a remainder of the information is dynamically notified.
FIG. 24 is a sequence diagram of a case in which a part of the information is semi-statically notified, and a remainder of the information is estimated at the base station end.
FIG. 25 is a sequence diagram of a case in which a set of interference control information is semi-statically notified, and actual allocation UE information is dynamically notified.
FIG. 26 is a sequence diagram of a case in which the set of the interference control information is semi-statically notified, and actual interference generation base station is dynamically notified.

### MODE OF CARRYING OUT THE INVENTION

A description will hereinafter be given of one embodiment of the present invention by referring to the drawings. The embodiment described in the following is merely an example, and embodiments to which the present invention may be applied are not limited to the following embodiment. For example, in this embodiment, SIC is described as an example of an interference reduction process, however, the present invention is not limited to the SIC and is also applicable to IRC (type 1) and MLD. In addition, in this embodiment, control information particularly related to PUSCH of Rel-8 is described as uplink control information, but this is merely an example, and the present invention is basically applicable to any Rel and any UL channel of LTE.

### (System Configuration Example)

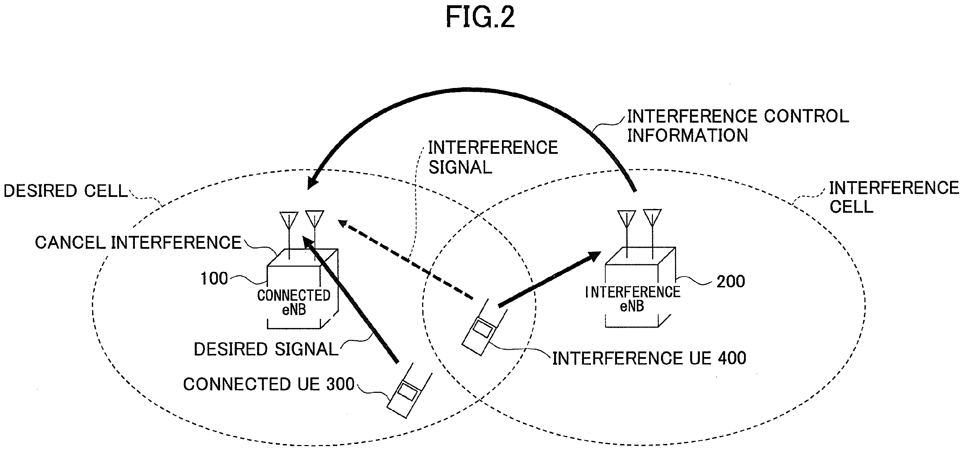

FIG. 2 is a schematic diagram of the configuration of a radio communication system in one embodiment of the present invention. The radio communication system in this embodiment is an LTE (not limited to a particular Rel) radio communication system in which a base station 100 (connected base station) forms a connection cell, and a user apparatus 300 (connected user apparatus) within a cell communicates with the connected base station 100 using a desired signal.

Typically, a large number of base stations are provided in the radio communication system, however, FIG. 2 illustrates only the connected base station 100 and an adjacent base station 200 (interference base station). The adjacent interference base station 200 also forms a cell, and transmits and receives signals with an interference user apparatus 400 having the interference base station 200 as the connected base station thereof. An uplink signal transmitted from the interference user apparatus 400 residing in the cell of the adjacent interference base station 400 becomes an uplink interference signal with respect to the connected base station 100.

In this embodiment, the base stations (the connected base station 100 and the interference base station 200) are connected by an X2 interface, and communication is possible between the base stations. The interference base station 200 transmits, with respect to the connected base station 100, control information (interference control information) that is required to perform a reduction process on an interference signal in the connected base station 100, and the connected base station 100 uses the control information to execute an interference reduction process with respect to the interference signal. A term "reduction of the interference signal" is a generic term for cancellation of the interference signal, rejection of the interference signal, and the like. However, in the case of the cancellation of the interference signal, or the rejection of the interference signal, the cancellation or rejection is not limited to a particular scheme. In other words, the scheme for the cancellation of the interference signal and the scheme for the rejection of the interference signal respectively are not limited to particular schemes.

The interference reduction process may use any technique from amongst SIC, MLD, IRC type 1, however, this embodiment assumes that a symbol level SIC is used. In addition, a target uplink signal on which the interference reduction process is performed is not limited to a particular signal, however, this embodiment assumes that the target uplink signal on which the interference reduction process is performed is a signal transmitted by PUSCH. The signal transmitted by PUSCH may be referred to as "data". In addition, a term "PUSCH" may be used to mean signal and/or data transmitted by the PUSCH.

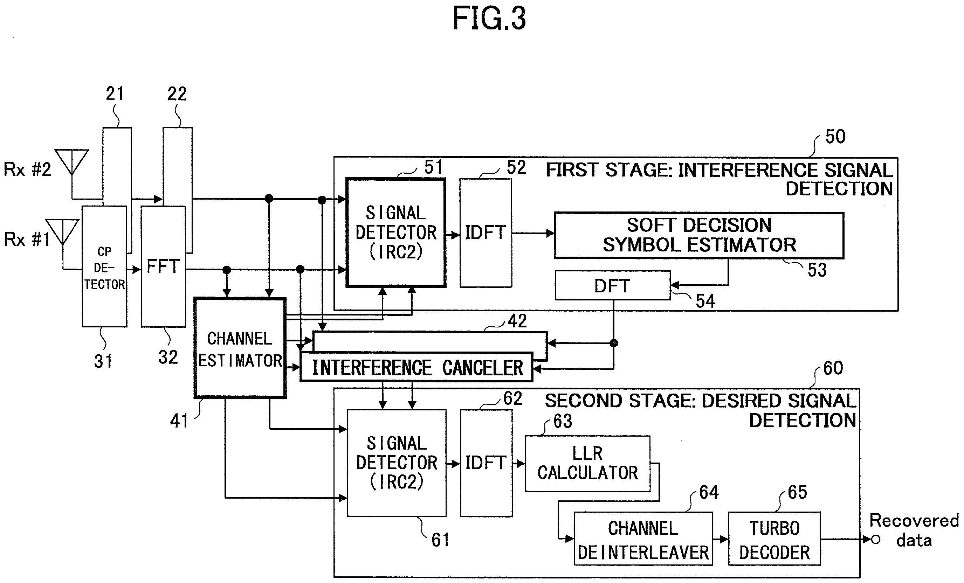

FIG. 3 illustrates an example of a configuration of an SIC receiver that is provided in the connected base station 100 and performs the interference reduction process in the uplink. Because the SIC receiver itself is an existing technology, the configuration thereof will be described briefly. As illustrated in FIG. 3, the SIC receiver in this example includes CP detectors 21 and 31, FFTs 22 and 32, a channel estimator 41, an interference canceler 42, a first stage 50 that performs an interference signal detection, and a second stage 60 that performs a desired signal detection.

The first state 50 includes a signal detector (IRC2) 51, an IDFT 52, a soft decision symbol estimator 53, and a DFT 54. The second stage 60 includes a signal detector (IRC2) 61, an IDFT 62, an LLR calculator 63, a channel interleaver 64, and a turbo decoder 65.

According to the configuration illustrated in FIG. 3, the channel estimator 41 performs a channel estimation of the interference signal and the desired signal, the first stage 50 performs a demodulation of the interference signal (PUSCH in this embodiment) using the channel estimation result, and the interference canceler 42 subtracts the interference signal from a reception signal, to acquire a highly accurate desired signal in the second stage. In code word level SIC, a process up to the decoding of the interference signal is performed in the first stage 50.

Because the above described process is performed, this embodiment requires, in the connected base station 100, the control information for the channel estimation of the interference signal (PUSCH), and the control information for the demodulation of the interference signal (PUSCH).

In the following description of the control information required for the interference reduction, the channel (particularly PUSCH) of the uplink of LTE, that is the target of the interference reduction in this embodiment, is generally described first, and the control information required for the interference reduction is described thereafter. The control information required for the interference reduction may be referred to as interference reduction information.

### (Regarding LTE Uplink)

In the following, as an example for the sake of convenience, a description will be given of contents of the uplink prescribed under Rel-8 of LTE. In addition, a description will be given particularly with respect to the PUSCH that is the target of the interference reduction process in this embodiment.

### <Summary of Uplink Channel>

The LTE includes, as UL physical channels, a PUCCH (Physical Uplink Control Channel), a PUSCH (Physical Uplink Shared Channel), a PRACH (Physical Random Access Channel), and the like.

The PUCCH is a control channel for transmitting a CQI (Channel Quality Indicator), an SR (Scheduling Request), an ACK/NACK, and the like. The PUSCH is a data channel that is used to transmit traffic data, and to transfer control data of a higher layer. The PRACH is a channel that is used to transmit a RACH preamble.

In addition, the LTE includes, as UL physical signals, a DMRS (Demodulation Reference Signal), an SRS (Sounding Reference Signal), and the like.

The DMRS is a signal used for a channel estimation of the PUSCH and the PUCCH. The SRS is a signal used for a channel quality measurement of the uplink, a timing measurement between eNB-UE, a scheduling of the UL, and the like.

The PUCCH is arranged in an RB (Resource Block) at both ends of a system band. In addition, the SRS is arranged in a last symbol of a subframe, and the PRACH is arranged in 6RB of the subframe determined for every cell.

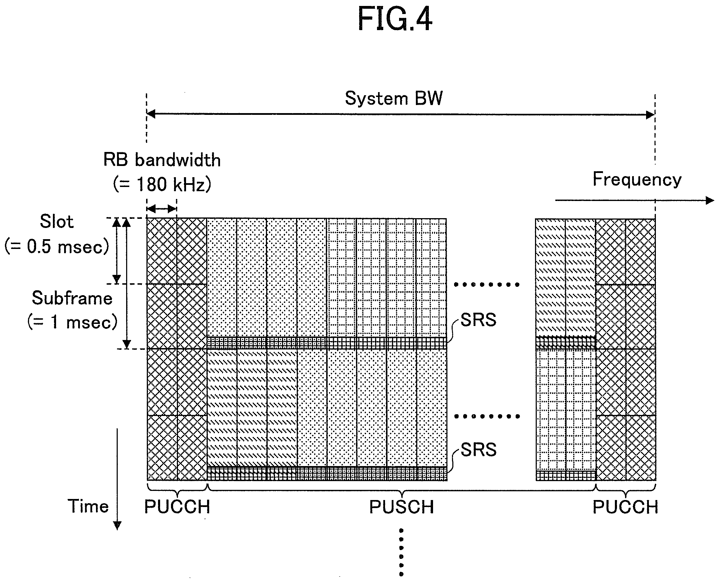

The PUSCH is arranged in a resource other than the above. FIG. 4 illustrates an example of an arrangement of the PUSCH, the SRS, and the PUCCH in a radio resource. As illustrated in FIG. 4, the PUSCH (allocated resource) of each user is frequency-multiplexed and time-multiplexed. More particularly, the allocated resources are orthogonal between the users on a frequency base and no interference occurs within the same cell, and frequency resources having a high reception quality can be allocated by frequency scheduling.

### <Regarding DMRS>

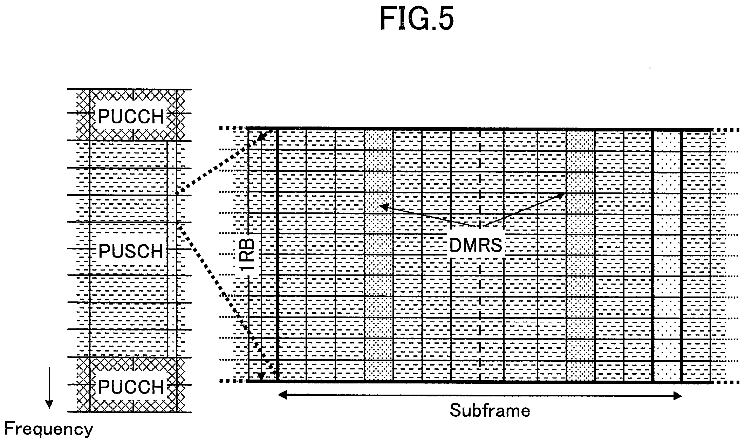

As illustrated in FIG. 5, the DMRS is multiplexed to the PUSCH. The DMRS multiplexed to the RB that transmits the PUSCH is used for the channel estimation to demodulate the PUSCH. In addition, in the PUSCH, the DMRS is multiplexed to a third SC-FDMA symbol of each slot, to thereby apply a cyclic shift multiplexing.

Because a Zadoff-Chu sequence is used for the DMRS, a general description will be given of the Zadoff-Chu sequence.

The Zadoff-Chu sequence is a type of CAZAC (Constant Amplitude Zero Auto-Correlation) sequence in which the amplitude of the sequence is constant, and has a characteristic in which an auto-correlation value other than a zero shift is zero. The Zadoff-Chu sequence also has a superior cross-correlation characteristic.

A number of sequence patterns of the Zadoff-Chu sequence becomes a maximum in a case in which a sequence length N is a prime number, and (N-1) sequences may be generated. Here, because the DMRS of the PUSCH requires a sequence length, amounting to a number of subcarriers, that is an [allocated number of RBs]x12, the Zadoff-Chu sequence is generated with the prime number that does not exceed the [number of RBs]x12, in order to maximize the number of sequence patterns, and insufficient sequence patterns are compensated by a cyclic extension.

30 sequence groups and 2 kinds of base sequence indexes (when RB>6) are used in the DM-RS. However, when the same sequence group and/or base sequence index is applied between the cells, signals collide and the characteristic deteriorates, and a hopping is thus used to reduce the probability of collision.

A group hopping and a sequence copping are 2 kinds of hopping prescribed for such a hopping.

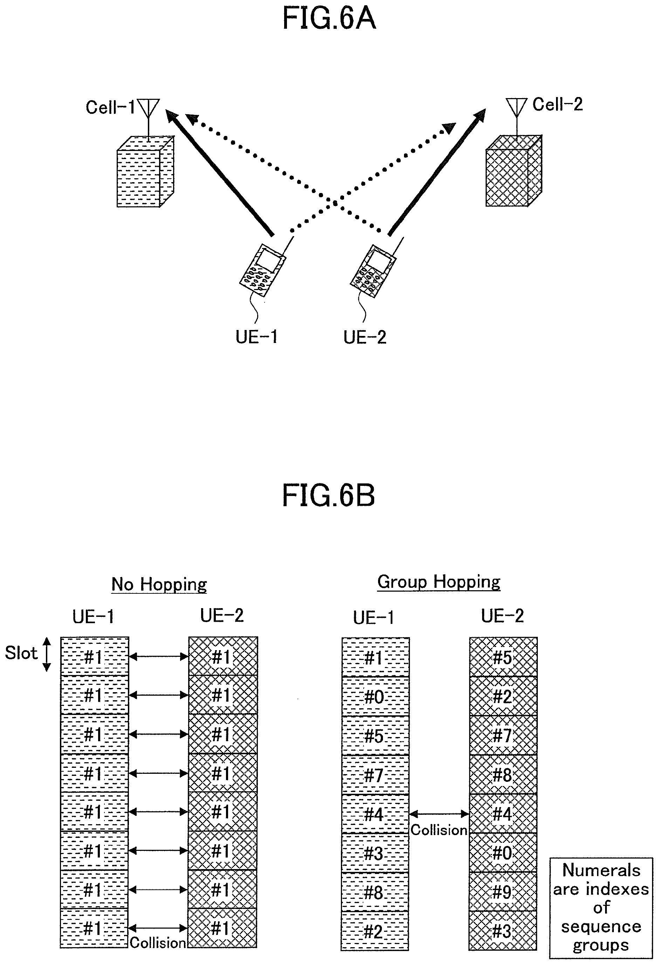

The group hopping causes hopping of a sequence group number in units of slots based on a Cell-ID, and as illustrated in FIG. 6A, in a state in which Cell-1 and Cell-2 exist and the same sequence (same sequence group number and base sequence index) are allocated to the Cell-1 and Cell-2, the signal collision occurs as illustrated on the left side in FIG. 6B in a case in which which no hopping is performed. On the other hand, as illustrated on the right side in FIG. 6B, the probability of the collision may be reduced by causing the hopping, in units of slots, of the sequence group number that is used when generating the DMRS sequence.

The group hopping and the sequence hopping cannot be used in combination. Whether to apply the hopping and the hopping method are notified by a broadcast channel.

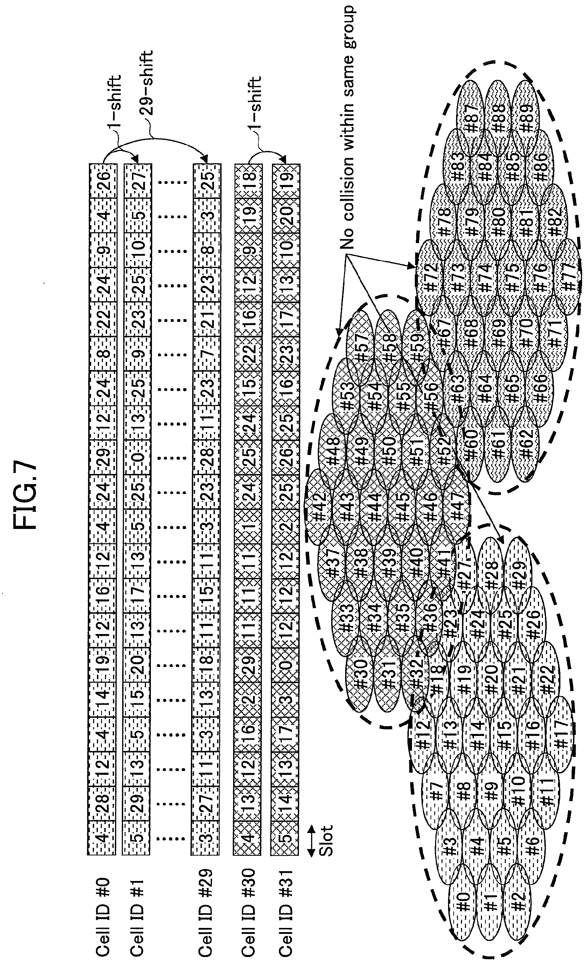

FIG. 7 is a diagram illustrating a detailed example of the group hopping. In the example illustrated in FIG. 7, cells Cell-ID#0 to #89 are illustrated. With respect to the hopping pattern, patterns of Cell-ID#0 to #29 are generated from one random sequence, patterns of Cell-ID#30 to #59 are generated from one random sequence, and patterns of Cell-ID#60 to #69 are generated from one random sequence. A group number in each slot of each pattern is cyclically shifted. For example, there is 1 shift between Cell-ID#0 and Cell-ID#1 in Fig. 7. By using the group hopping in this manner, it is possible to reduce the probability of collision of DMRS between the adjacent cells.

### <Regarding PUSCH>

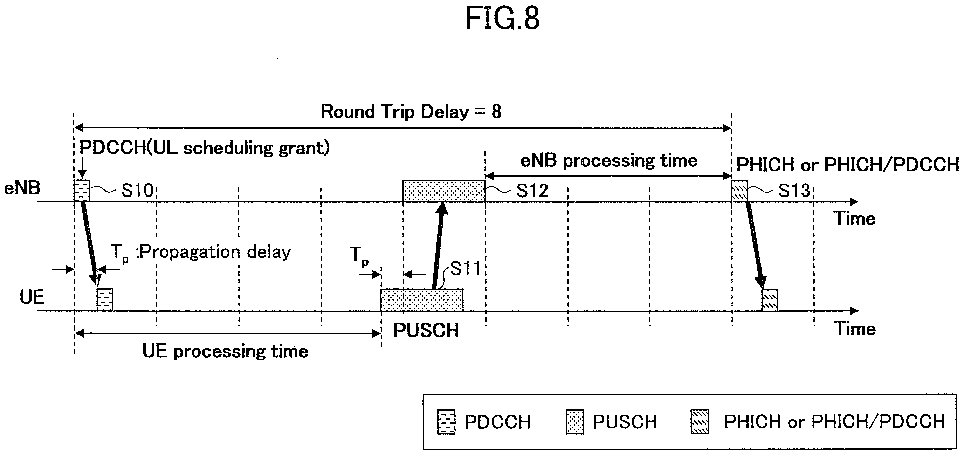

A description will be given of a signal transmission and reception procedure related to the PUSCH, by referring to FIG. 8. In the following, the base station is described as an eNB, and the user apparatus is describes as a UE.

In a subframe #n, in a case in which it is determined to cause the UE to transmit the uplink data channel by a scheduler process of the eNB, the eNB transmits the PDCCH for the UE (step 10).

The UE attempts reception of the PDCCH, and in a case in which the PDCCH (UL scheduling grant) addressed to itself is detected, recognizes that the PUSCH will be transmitted 4 msec later. In a subframe (#n+4), the UE transmits the PUSCH (step 11), and the eNB receives the PUSCH (step 12). FIG. 8 also illustrates a propagation delay Tp.

In a subframe (#n+8), the eNB judges whether to perform a retransmission according to a demodulation result (CRC OK/NG) of the PUSCH received in the subframe (#n+4), and transmits a PHICH (NACK) or PDCCH (UL scheduling grant) to the UE when performing the retransmission (step 13), to instruct the retransmission to the UE.

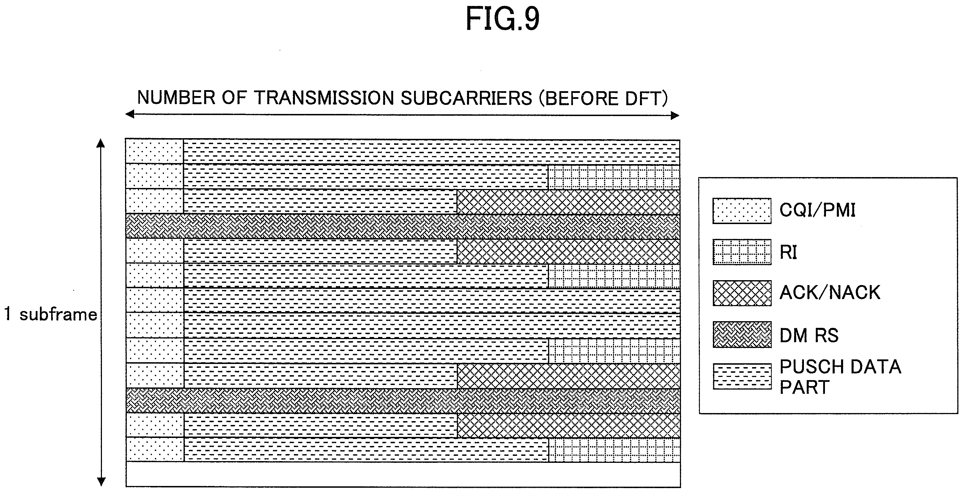

In a case in which a transmission timing of a UCI (CQI, RI, ACK/NACK) by the PUCCH and a transmission timing of the PUSCH occur simultaneously, the UCI is multiplexed to the PUSCH and transmitted. This is in order to secure characteristics of a single carrier. In this case, before the DFT, the UCI is arranged as illustrated in FIG. 9. In other words, the ACK/NACK is arranged in a symbol adjacent to the DMRS, the RI is arranged in a symbol adjacent to the position where the ACK/NACK is arranged, and the CQI is arranged throughout all of the symbols.

In addition, in the PUSCH, a frequency hopping is applied in order to obtain a frequency diversity.

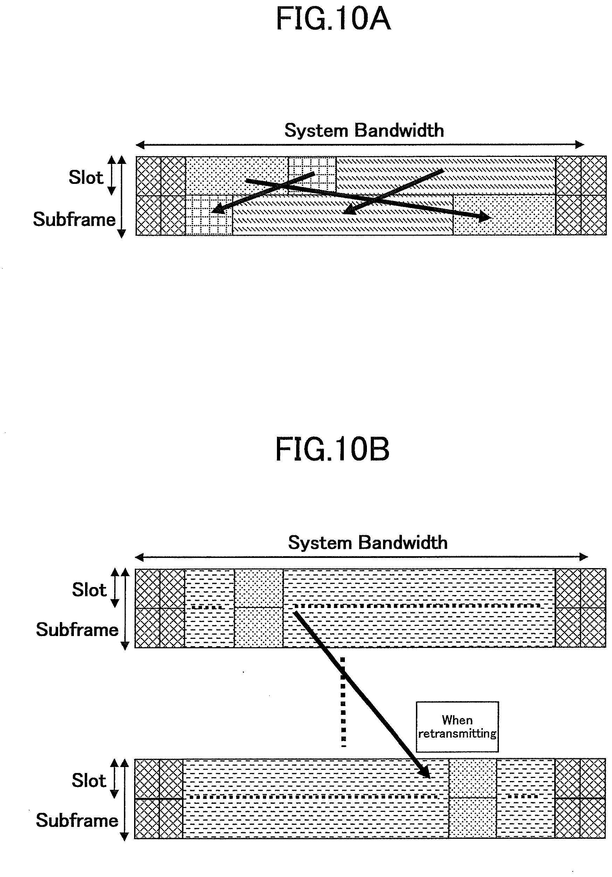

The frequency hopping includes an intra-TTI hopping that performs the hopping in units of slots within the TTI, and an inter-TTI hopping that performs the hopping between the TTIs. FIG. 10A illustrates an example of the intra-TTI hopping, and FIG. 10B illustrates an example of the inter-TTI hopping. As illustrated in FIG. 10B, the inter-TTI hopping is performed to change the RB that is used when performing the retransmission.

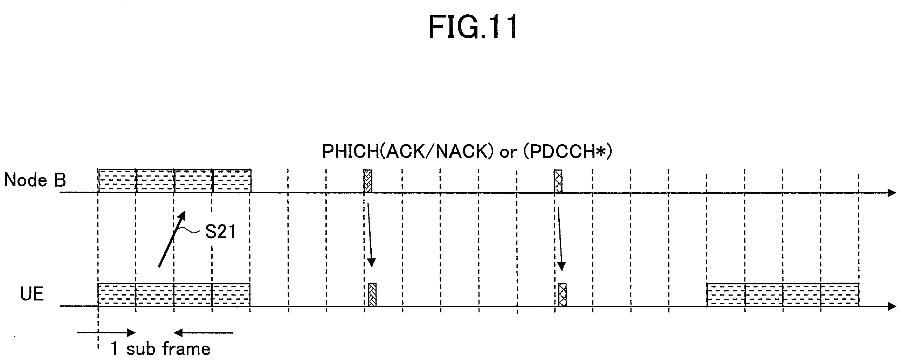

In addition, in the UL of the LTE, there are cases in which a TTI bundling is performed to send one information (PUSCH data and the like) over a plurality of TTIs, as illustrated by step 21 of FIG. 11. Accordingly, the coverage is improved, and particularly, an effective method is provided for a GBR (Guaranteed Bit Rate) service and the like, such as a VoIP and the like.

### (Regarding Information Required To Perform Interference Reduction Process)

A description will hereinafter be given of an example of control information that is required to perform the interference reduction process with respect to the interference signal by the connected base station 100, in the system according to this embodiment illustrated in FIG. 2. As described above, in this embodiment, as an example, the PUSCH is the target interference signal on which the interference reduction process is performed, and the interference reduction process is the SIC, however, the present invention is also applicable to other interference signals and other interference reduction processes.

As described above, the information for estimating the channel of the interference signal, and the information for demodulating the PUSCH (demodulating and decoding in the case of a code word SIC) are required as the control information for performing the interference reduction process. A description will hereinafter be given of each of these information.

### <Example of Information For Estimating Channel of Interference Signal>

In order to estimate the channel of the interference signal, sequence information of the DMRS, which is a reference signal for demodulation of the PUSCH, is required. In order to acquire the sequence information of the DMRS, (A) specifying the Zadoff-Chu sequence that becomes a base, and (B) specifying a phase rotation amount with respect to the Zadoff-Chu sequence that becomes a base, are required. A description will hereinafter be given of contents of these specifying, however, the Non-Patent Document 2 (Sect. 5.5.1) may be referred to for details.

### ---(A) Specifying Zadoff-Chu sequence That Becomes The base---

Information of an allocation bandwidth of the PUSCH is required in order to specify the Zadoff-Chu sequence that becomes the base (also referred to as a base sequence). This is because the sequence changes according to the allocation bandwidth (number of RBs) of the PUSCH.

Further, information indicating which Zadoff-Chu sequence is used is required. More particularly, the group number (a total of 30 patterns) and the base sequence number (1 pattern if allocation is up to 5RBs, and 2 patterns if more than 5RBs) are required.

When notifying these information from the interference base station 200 to the connected base station 100, the group number and/or base sequence number itself may be notified, or the hopping information and the slot number may be notified.

The hopping information includes group hopping information and sequence hopping information. The group hopping information includes information (for example, "group-hopping-enabled" notified in the higher layer) indicating whether the group hopping is to be performed, and information for generating the hopping pattern, such as a physical cell ID, a sequence-shift pattern, and the like. The sequence-shift pattern may be calculated from a PCID and a Δss notified in the higher layer.

The information related to the sequence hopping includes information (for example, "sequence-hopping-enabled" notified in the higher layer) indicating whether the sequence hopping is to be performed, and information for generating the hopping pattern, such as the PCID, the sequence-shift pattern, and the like. In the case of the allocation up to 5RBs, no hopping is performed because there is only 1 pattern.

### ---(B) Specifying Phase Rotation Amount With Respect To Base sequence ---

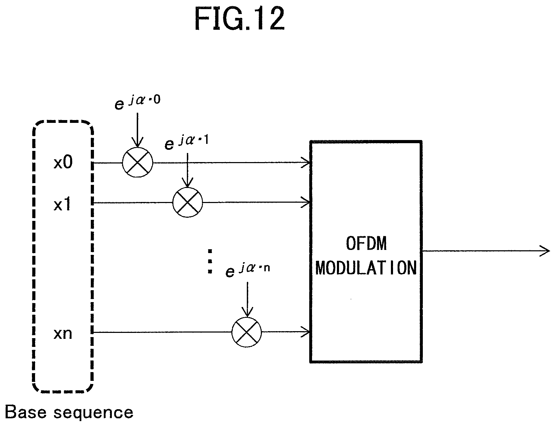

As illustrated in FIG. 12, the base sequence of the DM-RS is subjected to a phase rotation by a predetermined phase rotation amount (α), and is thereafter subjected to an OFDM modulation and transmitted. This phase rotation amount (α) is required to specify the sequence information of the DMRS.

Hence, α itself may be notified from the interference base station 200 to the connected base station 100, or information required to calculate α may be notified to the connected base station 100 to calculate the α therein.

The information required to calculate α may be "cyclic shift" information notified in the higher layer, a cyclic shift for DMRS (to be described later) notified in the DCI form at 0 of the downlink, a PCID, a slot number nₛ, a sequence-shift pattern (fₛₛ), and the like.

### <Information Required To Demodulate PUSCH>

Information required to demodulate the PUSCH includes allocation band information, PUSCH hopping information, modulation information, information indicating whether the SRS is configured, and information indicating whether UCI is multiplexed. These information are required for the demodulation of the PUSCH assuming the symbol level SIC. In the case of the code word SIC, in addition to these information, coding information and redundancy version, scrambling information, and a C-RNTI (or parity check bit) are required as information for the demodulation. These information are notified as the interference control information, from the interference base station 200 to the connected base station 100.

In addition to the above information, TTI bundling information, and information indicating whether the PUSCH hopping is to be performed when performing the retransmission, may be notified. By notifying such information, it is possible to improve the interference detection capability.

### ---Regarding DCI Format 0---

Amongst the above information, the allocation band information, the PUSCH hopping information, modulation information and the coding information and redundancy version are information included in the DCI format 0 (control information notified by the PDCCH), for example.

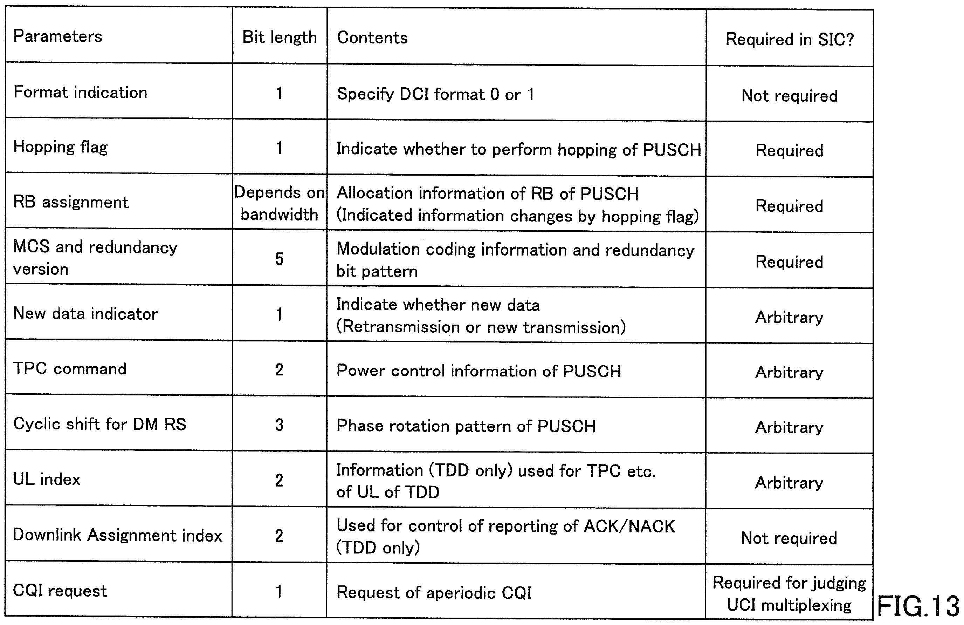

FIG. 13 illustrates an example of the DCI format 0 (refer to Non-Patent Document 3 for details). The right end column of FIG. 13 illustrates whether corresponding information is required in the SIC. In FIG. 13, the information indicated as "required" may be notified from the interference base station 200 to the connected base station 100. As illustrated in FIG. 13, a CQI request is information indicating whether to perform an aperiodic CQI transmission, and as will be described later, is the information required to judge whether the UCI is multiplexed.

### ---Information Indicating Whether UCI Is Multiplexed---

Next, a description will be given of the information indicating whether the UCI is multiplexed. In the demodulation of the PUSCH in the SIC, in the case in which the UCI is multiplexed, the demodulation of not only the data but also the UCI is required, and thus, the information indicating whether the UCI is multiplexed is required.

The connected base station 100 can implicitly judge whether the UCI is multiplexed to the PUSCH in a subordinate UE, because it is a matter configured by the connected base station 100 itself in the UE. However, since the connected base station 100 cannot ascertain the signal from the interference UE, this embodiment explicitly notifies information indicating the same from the interference base station 200 to the connected base station 100. To be more precise, the above noted information includes the information indicating whether the UCI is multiplexed (or information indicating the UCI is multiplexed), and information indicating which UCI format is multiplexed. However, the latter information indicating which UCI format is multiplexed is not required in a case in which the PUSCH of the interference UE is a QPSK and the interference reduction process is the symbol level SIC.

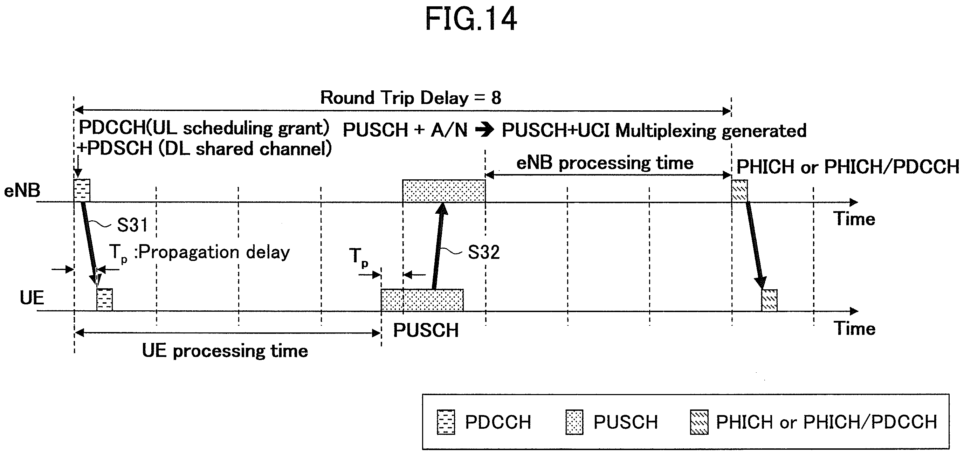

FIGs. 14 to 16 illustrate 3 examples of the case in which the UCI is multiplexed. In FIGs. 14 to 16, the base station is described as an eNB, and the user apparatus is describes as a UE.

FIG. 14 is an example of a case in which the downlink data (PDSCH) is transmitted simultaneously as the UL scheduling grant (DCI format 0).

As illustrated in FIG. 14, when the PDSCH and the PDCCH (UL scheduling grant) are simultaneously transmitted from the eNB with respect to the UE (step 31), the PUSCH multiplexed with the ACK/NACK is transmitted from the UE with respect to the eNB in step 32.

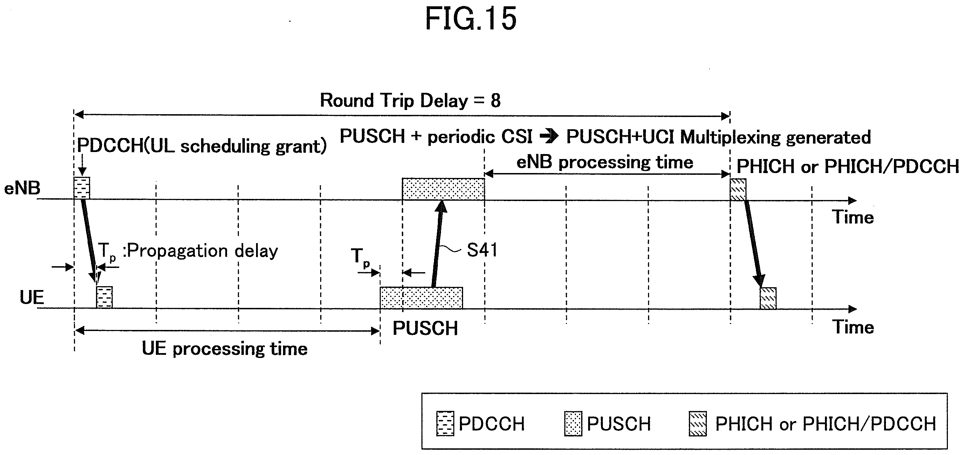

FIG. 15 is an example of a case in which the PUSCH and the periodic CSI feedback occur simultaneously. In step 41 of FIG. 15, the PUSCH transmission timing from the UE and the period CSI feedback timing match, and the PUSCH and the periodic CSI are simultaneously transmitted from the UE to the eNB.

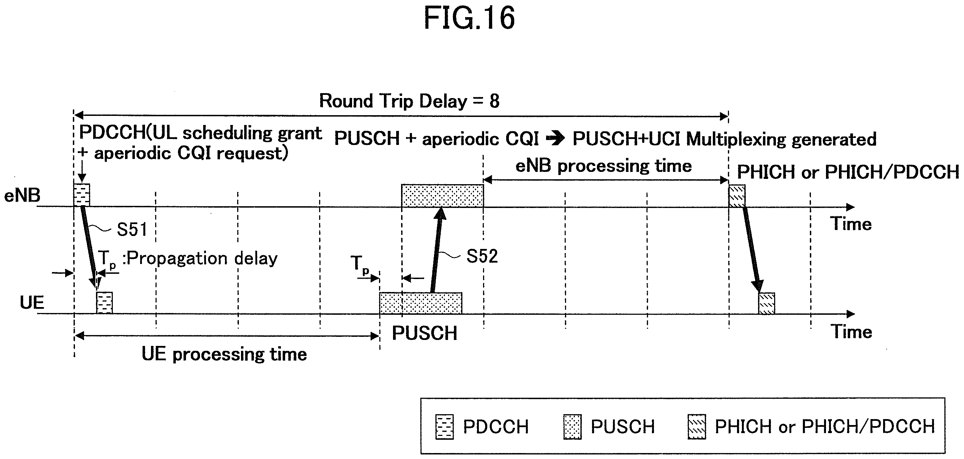

FIG. 16 is an example of a case in which the PUSCH and the aperiodic CSI feedback are scheduled.

As illustrated in FIG. 16, when the PUSCH is scheduled by the scheduling grant from the eNB with respect to the UE, and the aperiodic CSI feedback is scheduled (step 51), the PUSCH multiplexed with the aperiodic CSI (CQI in FIG. 16) is transmitted from the UE with respect to the eNB in step 52.

As described in the above noted example, "the information indicating UCI multiplexing" that is transmitted from the interference base station 200 to the connected base station 100 includes, for example, "simultaneous transmission of the PDSCH and the UL scheduling grant", "the matching of the PUSCH transmission timing and the periodic CSI timing", "the scheduling of the PUSCH and the aperiodic CSI feedback", and the like.

### <Summary of Interference Control Information>

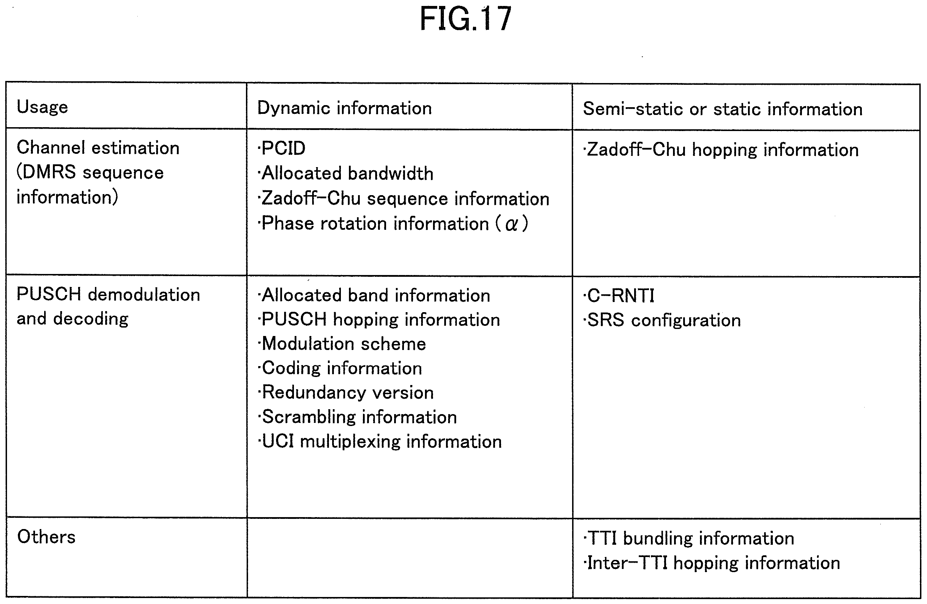

FIG. 17 is a diagram of an example of the interference control information, that is the information required for the interference reduction process (SIC in this example) on the interference signal, in the connected base station 100.

As illustrated in FIG. 17, of the information for the channel estimation, the dynamically changing (for example, in units of subframes or slots) information includes the PCID, the allocation bandwidth, the Zadoff-Chu sequence information, the phase rotation information (α), and the like, while the semi-static or static information includes the Zadoff-Chu hopping information and the like.

In addition, of the information for the demodulation and decoding of the PUSCH, the dynamically changing information includes the allocation bandwidth information, the PUSCH hopping information, the modulation scheme, the coding information, the redundancy version, the scrambling information, and the UCI multiplexing information, while the semi-static or static information includes the C-RNTI, the SRS configuration, and the like.

Moreover, other information includes the TTI bundling information, the inter-TTI hopping information, and the like.

The "semi-static" information refers to information notified by the RRC signaling, for example. In addition, "semi-statically transmitting information" refers to transmitting information at longer time intervals than the dynamically transmitting (for example, in units of subframes).

The information illustrated in FIG. 17 are examples, and all of these information may be transmitted from the interference base station 200 to the connected base station 100, or a part of these information may be transmitted. In addition, information not illustrated in FIG. 17 may be transmitted from the interference base station 200 to the connected base station 100. In the case in which a part of these information is transmitted, the required information that is not transmitted may be estimated when an estimation is possible in the connected base station 100. In the case in which the estimation of the required information that is not transmitted is difficult, a predetermined value may be used, for example.

In addition, although the dynamically changing information is basically transmitted dynamically, the dynamically changing information may be transmitted semi-statically or statically.

### (Signaling Method)

In this embodiment, the interference control information is notified (signaled) from the interference base station 200 to the connected base station 100 by the X2 interface, for example, with a pattern indicated by the following methods 1 to 4. The use of the X2 interface is an example, and the interference control information may be transmitted and received by any route as long as it is possible to transmit and receive the information required between the base stations.

### <Method 1>

The method 1 dynamically notifies all of the interference control information to be notified for every subframe, from the interference base station 200 to the connected base station 100.

### <Method 2>

The method 2 semi-statically notifies information (for example, semi-statically changing information) of a part of the interference control information to be notified, from the interference base station 200 with respect to the connected base station 100. A method 2-1 dynamically notifies information of a remainder of the interference control information. In addition, a method 2-2 estimates the information of the remainder of the interference information at the connected base station 100 end.

### <Method 3>

The method 3 semi-statically notifies a set of information (for example, semi-statically changing information) of a part of the interference control information at a plurality of interference user apparatuses, and dynamically notifies information indicating which one of the interference user apparatuses is actually allocated with the PUSCH, from the interference base station 200 with respect to the connected base station 100. Information of a remainder of the interference control information may be dynamically notified (this is referred to as a method 3-1), or may be estimated at the connected base station 100 end (this is referred to as a method 3-2).

### <Method 4>

The method 4 assumes that a plurality of interference base stations exist, and each of the plurality of interference base stations semi-statically transmits a part of the interference control information (for example, semi-statically changing information) at each of the plurality of interference base stations to the connected base station 100, and dynamically notifies information (ON/OFF information) indicating whether its own cell actually cause an uplink interference with respect to the connected base station 100. Information of a remainder of the interference control information may be dynamically notified (this is referred to as a method 4-1), or may be estimated at the connected base station 100 end (this is referred to as a method 4-2).

### (Configuration of Apparatus)

### <Schematic Configuration>

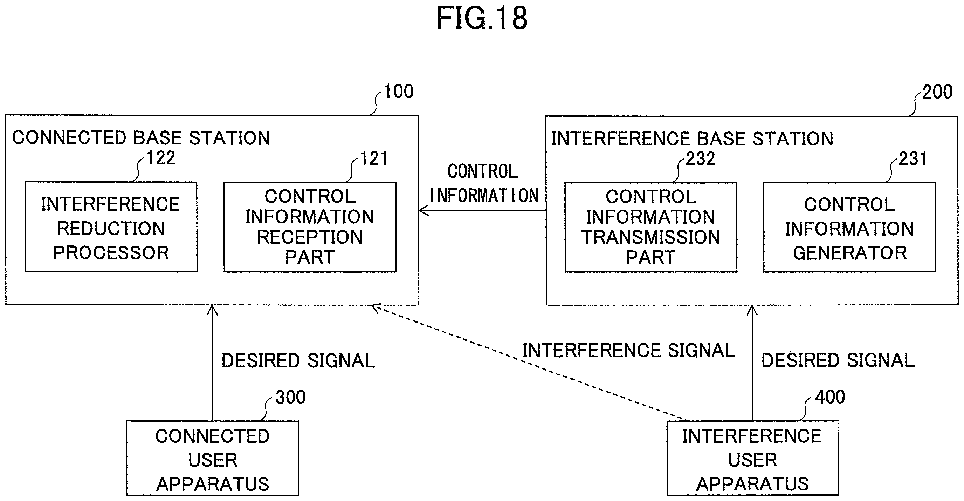

Next, a description will be given of a system configuration in one embodiment of the present invention. FIG. 18 is a block diagram schematically illustrating the configuration of the base station in one embodiment of the present invention. FIG. 18 corresponds to the system configuration illustrated in FIG. 2, and illustrates the connected base station 100, the interference base station 200, the connected user apparatus 300, and the interference user apparatus 400. In addition, FIG. 18 illustrates functions related particularly to the reduction process on the uplink interference signal in each base station.

As illustrated in FIG. 18, the connected base station 100 includes a control information reception part 121 that receives from the interference base station 200 the control information used for reducing the interference signal with respect to the connected base station 100, and an interference reduction processor 122 that reduces the interference signal by using the control information, to acquire the desired signal transmitted from the connected user apparatus 300. In addition, the interference base station 200 includes a control information generator 231 that generates the control information (information related to an uplink desired signal of the interference user apparatus 400), and a control information transmission part 232 that transmits the control information to the connected base station 100.

### <Example of Detailed Configuration>

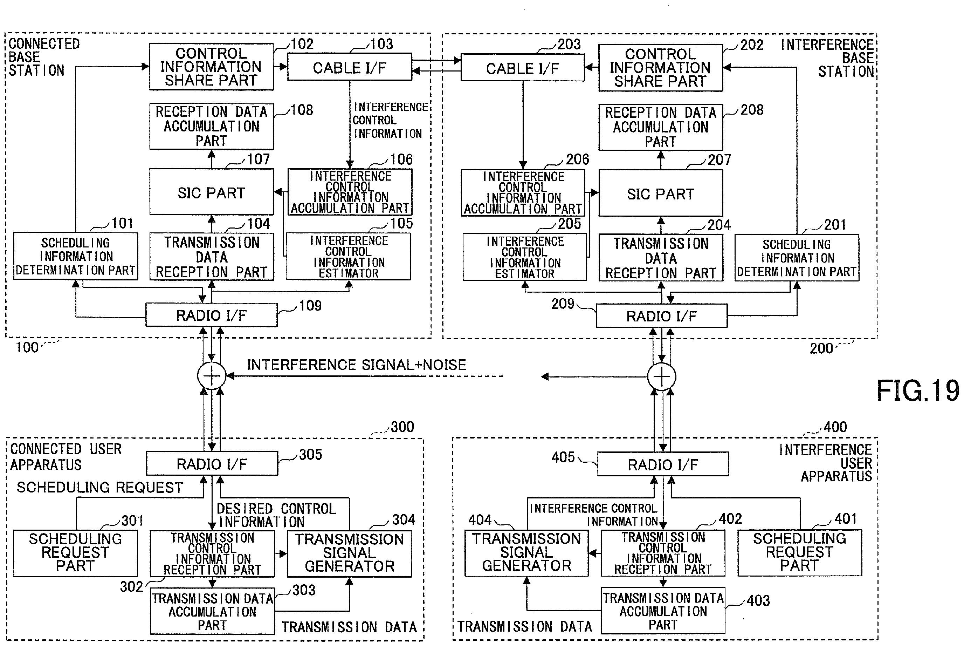

Next, a description will be given of a detailed system configuration in one embodiment of the present invention. FIG. 19 is a block diagram illustrating a detailed configuration of each apparatus in one embodiment of the present invention. FIG. 19 corresponds to the system configuration illustrated in FIG. 2, and illustrates the connected base station 100, the interference base station 200, the connected user apparatus 300, and the interference user apparatus 400.

As illustrated in FIG. 19, the connected base station 100 includes a scheduling information determination part 101, a control information share part 102, a cable I/F (Interface) 103, a transmission data reception part 104, an interference control information estimator 105, an interference control information accumulation part 106, an SIC part 107, a reception data accumulation part 108, and a radio I/F 109. The interference base station 200 has a configuration similar to that of the connected base station 100. Each function part of the connected base station 100 is described in the following, however, each function part of the interference base station 200 is similar thereto.

The scheduling information determination part 101 determines (generates) resource allocation information (control information) of a subordinate user apparatus. The control information share part 102 notifies the control information (interference control information to other base stations) determined by the scheduling information determination part 101 to the other base stations. The cable I/F 103 is a cable I/F between the base stations, however, a radio I/F may be used instead.

The transmission data reception part 104 receives the data transmitted from the user apparatus. The interference control information estimator 105 estimates the control information of the interference signal from the received signal. The interference control information estimator 105 may be omitted in a case in which no estimation is performed. In addition, the estimation method is not limited to a particular method, and an arbitrary method may be used. For example, in a case in which values of the information to be estimated are limited, a most probable value may be obtained from the reception signal by a maximum likelihood estimate, and further, a value obtained by decoding the control signal of the interference signal may be used as the estimated value.

The interference control information accumulation part 106 receives and accumulates the control information of the interference signal (interference control information) from the other base stations. The SIC part 107 performs the SIC with respect to the interference signal using the reception signal and the control information of the interference signal, to decode the reception data. The reception data accumulation part 108 is a memory that accumulates the reception data, and the radio I/F 109 performs a radio communication with the user apparatus.

As illustrated in FIG. 19, the connected user apparatus 300 includes a scheduling request part 301, a transmission control information reception part 302, a transmission data accumulation part 303, a transmission signal generator 304, and a radio I/F 305. The interference user apparatus 400 has a configuration similar to that of the connected user apparatus 300. Each function part of the connected user apparatus 300 is described in the following, however, each function part of the interference user apparatus 400 is similar thereto.

The scheduling request part 301 requests a resource allocation of an uplink to the base station. The transmission control information reception part 302 receives the resource allocation information from the base station. The transmission data accumulation part 303 is a memory that accumulates the transmission data. The transmission signal generator 304 modulates and codes the transmission data into a radio signal based on the control information received from the base station. The radio I/F 305 performs a radio communication with the base station.

### (Example of HW Structure)

The configuration of each of the apparatuses illustrated in FIGs. 18 and 19 may be realized in its entirety by a hardware circuit (for example, 1 or a plurality of IC chips), or a part may be formed by a hardware circuit and other parts may be realized by a CPU and programs.

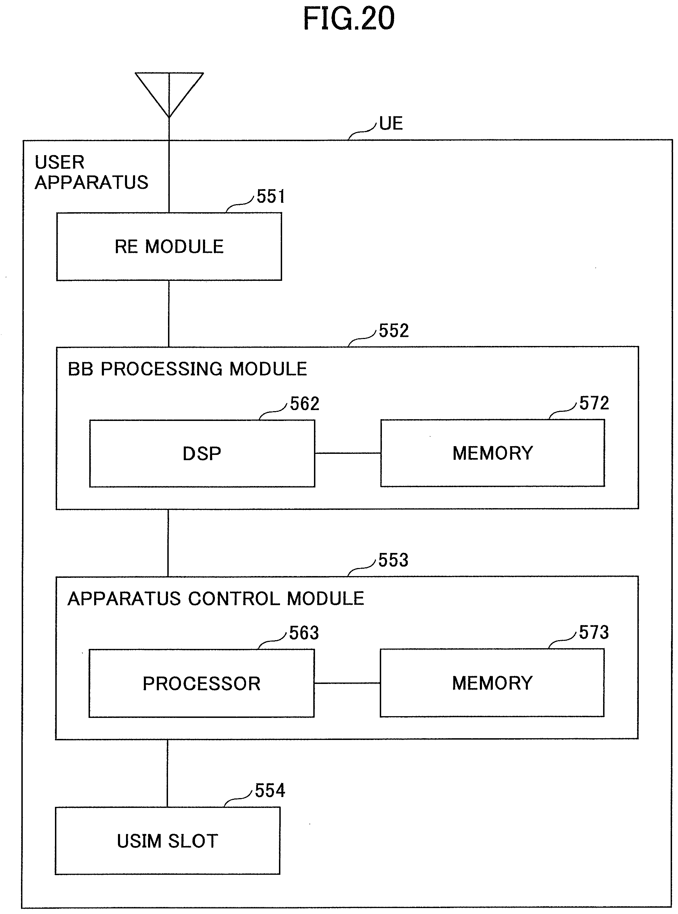

FIG. 20 is a diagram illustrating an example of a HW (hardware) configuration of the user apparatus UE corresponding to the connected user apparatus 300. FIG. 20 illustrates a configuration closer to an example of an implementation than the configurations illustrated in FIGs. 18 and 19. As illustrated in FIG. 20, the UE includes an RE (Radio Equipment) module 551 that performs a process related to the radio signal, a BB (Base Band) processing module 552 that performs a process on a baseband signal, an apparatus control module 553 that performs a process of a higher layer and the like, and a USIM slot 554 that is an interface for making access to a USIM card.

The RE module 551 performs a D/A (Digital-to-Analog) conversion, a modulation, a frequency conversion, a power amplification, and the like with respect to a digital baseband signal received from the BB processing module 552, to generate the radio signal to be transmitted from an antenna. In addition, the RE module 551 performs a frequency conversion, an A/D (Analog-to-Digital) conversion, a demodulation, and the like with respect to a received radio signal, to generate a digital baseband signal that is supplied to the BB processing module 552. The functions of each part of the connected user apparatus 300 illustrated in FIG. 18 or FIG. 19 may be included in the RE module 551. Alternatively, a part of the functions of the connected user apparatus 300 illustrated in FIG. 18 or FIG. 19 may be included in the RE module 551, and other parts of the functions may be included in the BB processing module 552 described below.

The BB processing module 552 performs a process to mutually convert an IP packet and a digital baseband signal. A DSP (Digital Signal Processor) 562 is a processor for performing the signal processing in the BB processing module 552. A memory 572 is used as a work area for the DSP 562.

The apparatus control module 553 performs a protocol process of an IP layer, processes of various applications, and the like. A processor 563 is a processor for performing the process of the apparatus control module 553. A memory 573 is used as a work area of the processor 563. In addition, the processor 563 performs a data read from and a data write to the USIM via the USIM slot 554.

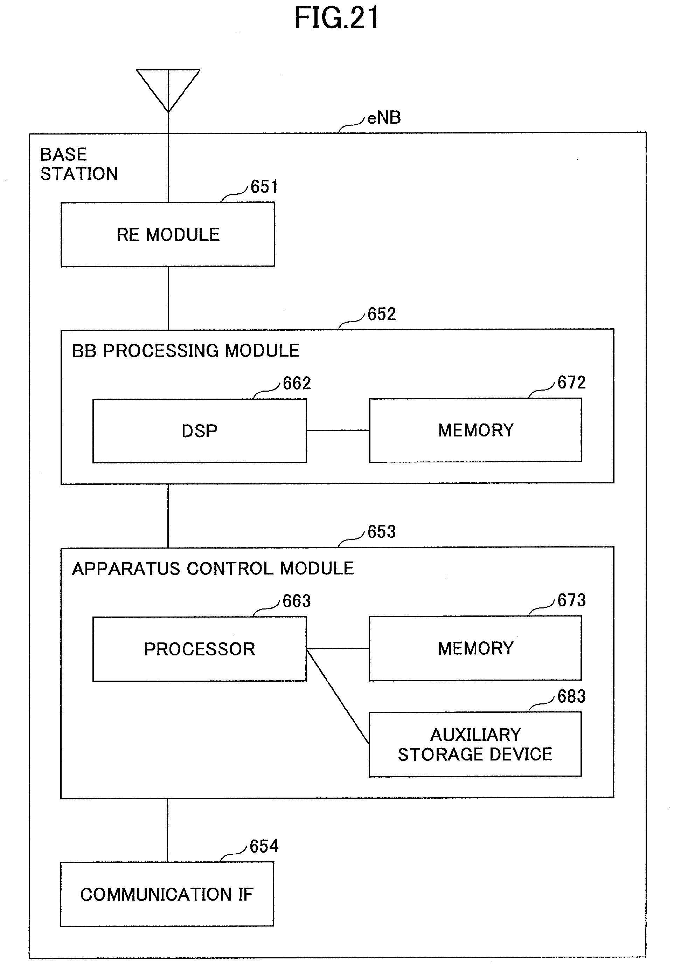

FIG. 21 is a diagram illustrating an example of a hardware (HW) configuration of the base station eNB corresponding to the connected base station 100. FIG. 21 illustrates a configuration closer to an example of an implementation than the configurations illustrated in FIGs. 18 and 19. As illustrated in FIG. 21, the base station eNB includes an RE module 651 that performs a process related to the radio signal, a BB (Base Band) processing module 652 that performs a process on a baseband signal, an apparatus control module 653 that performs a process of a higher layer and the like, and a communication IF 654 that is an interface for making a network connection.

The RE module 651 performs a D/A conversion, a modulation, a frequency conversion, a power amplification, and the like with respect to a digital baseband signal received from the BB processing module 652, to generate the radio signal to be transmitted from an antenna. In addition, the RE module 651 performs a frequency conversion, an A/D conversion, a demodulation, and the like with respect to a received radio signal, to generate a digital baseband signal that is supplied to the BB processing module 652. The functions of each part of the connected base station 100 illustrated in FIG. 18 or FIG. 19 may be included in the RE module 651. Alternatively, a part of the functions of the connected base station 100 illustrated in FIG. 18 or FIG. 19 may be included in the RE module 651, and other parts of the functions may be included in the BB processing module 652 described below.

The BB processing module 652 performs a process to mutually convert an IP packet and a digital baseband signal. A DSP 662 is a processor for performing the signal processing in the BB processing module 652. A memory 672 is used as a work area for the DSP 662.

The apparatus control module 653 performs a protocol process of an IP layer, an OAM process, and the like. A processor 663 is a processor for performing the process of the apparatus control module 653. A memory 673 is used as a work area of the processor 663. An auxiliary storage device 683 is an HDD and the like, for example, and stores various setting information and the like for operating the base station eNB itself.

### (Operation Example of System)

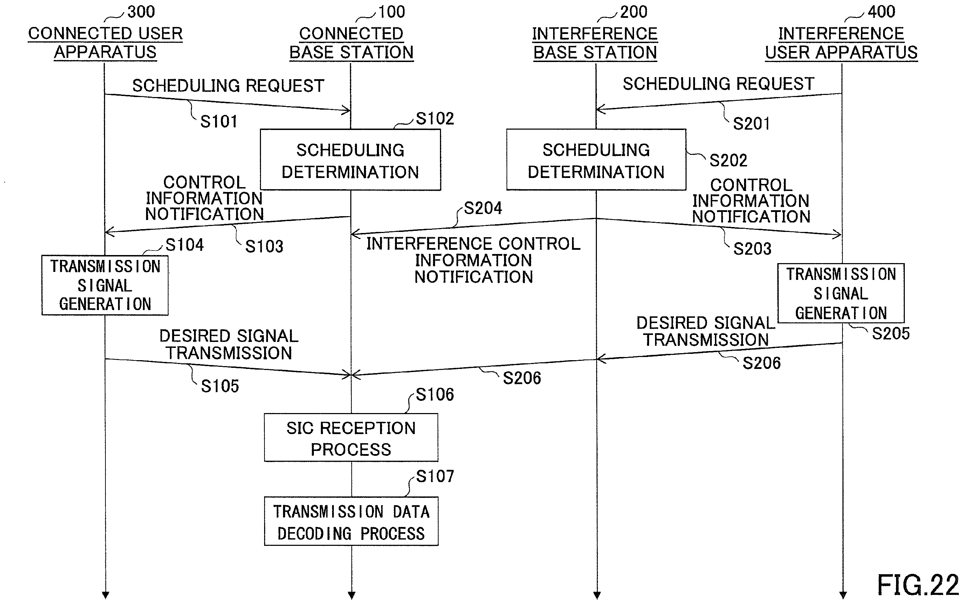

Next, a description will be given of operation examples 1 to 4 of the system including the functions illustrated in FIG. 18 or FIG 19, by referring to FIGs. 22 to FIG. 26.

### <Operation Example 1>

FIG. 22 corresponds to the method 1, and is a sequence diagram for a case in which all of the information is dynamically notified for every subframe.

When the connected user apparatus 300 transmits the scheduling request to the connected base station 100 (step 101), the connected base station 100 determines the scheduling (for example, allocation of the PUSCH) of the connected user apparatus 300, and transmits the control information (for example, the UL grant) to the connected user apparatus 300 (step 103). Hence, the connected user apparatus 300 generates the transmission signal (step 104), and transmits the desired signal (data and the like transmitted by the PUSCH) to the connected base station 100 (step 105).

Similarly on the interference base station 200 end, when the interference user apparatus 400 transmits the scheduling request to the interference base station 200 (step 201), the interference base station 200 determines the scheduling (for example, allocation of the PUSCH) of the interference user apparatus 400, and transmits the control information (for example, the UL grant) to the interference user apparatus 400 (step 203). Hence, the interference user apparatus 400 generates the transmission signal (step 205), and transmits the interference signal (desired signal to the interference base station 200) to the interference base station 200 (step 206). This interference signal arrives at the connected base station 100.

In addition, after determining the scheduling, the interference base station 200 notifies the interference control information to the connected base station 100 (step 204). The connected base station 100 performs an SIC reception process using the interference control information (step 106), and decodes the transmission data (step 107). In other words, the connected base station 100 demodulates the interference signal within the reception signal received in step 105 and step 206, and acquires the desired signal by canceling the interference signal from the reception signal, to acquire the transmission data by decoding the desired signal.

### <Operation Example 2>

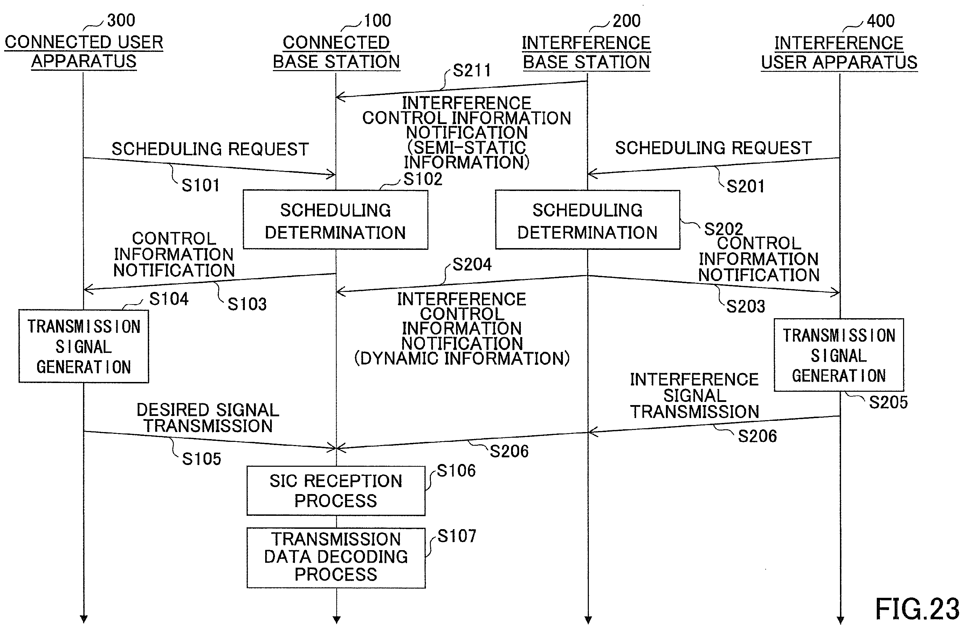

FIG. 23 corresponds to the method 2-1, and is a sequence diagram for the case in which a part of the information is semi-statically notified, while a remainder of the information is dynamically notified.

As illustrated in FIG. 23, the interference base station 200 semi-statically transmits a part of the interference control information with respect to the connected base station 100 (step 211).

In addition, the connected user apparatus 300 transmits a scheduling request to the connected base station 100 (step 101), and the connected base station 100 determines the scheduling (for example, allocation of the PUSCH) of the connected user apparatus 300, and transmits the control information (for example, the UL grant) to the connected user apparatus 300 (step 103). Hence, the connected user apparatus 300 generates the transmission signal (step 104), and transmits the desired signal (data and the like transmitted by the PUSCH) to the connected base station 100 (step 105).

Similarly on the interference base station 200 end, the interference user apparatus 400 transmits the scheduling request to the interference base station 200 (step 201), and the interference base station 200 determines the scheduling (for example, allocation by the PUSCH) of the interference user apparatus 400, and transmits the control information (for example, the UL grant) to the interference user apparatus 400 (step 203). Hence, the interference user apparatus 400 generates the transmission signal (step 205), and transmits the interference signal (desired signal to the interference base station 200) to the interference base station 200 (step 206). This interference signal arrives at the connected base station 100.

In addition, the interference base station 200, after determining the scheduling, notifies the remainder interference control information (dynamic information) to the connected base station 100 (step 204). The connected base station 100 performs the SIC reception process using the interference control information received in step 211 and the interference control information received in step 204 (step 106), and decodes the transmission data (step 107).

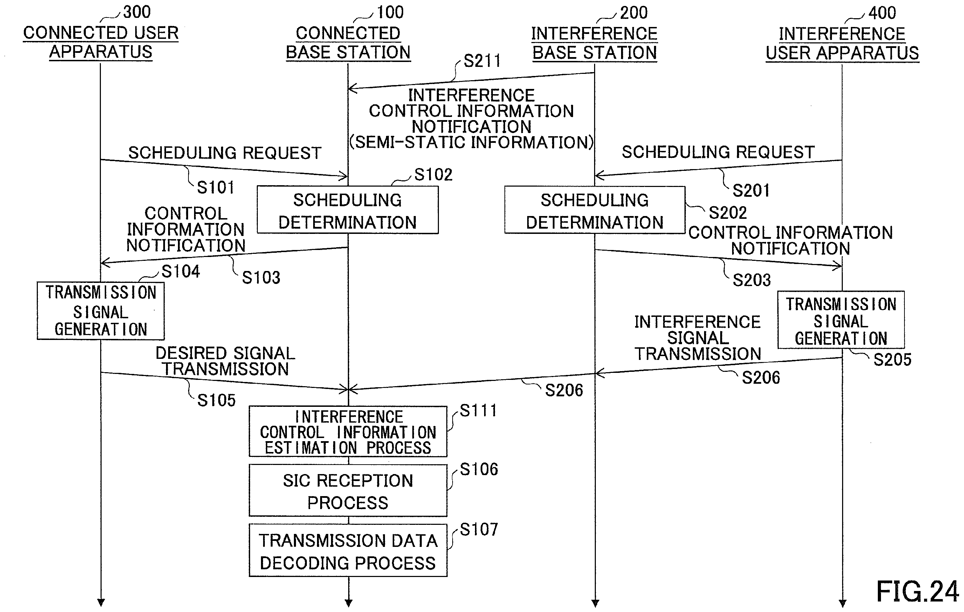

FIG. 24 corresponds to the method 2-2, and is a sequence diagram for the case in which a part of the information is semi-statically notified, and a remainder of the information is estimated at the base station end. When compared to FIG. 23, FIG. 24 differs in that no step 204 illustrated in FIG. 23 is provided and step 111 is additionally provided, but the process is otherwise the same as that of FIG. 23. In step 111, the connected base station 100 estimates the interference control information that is not received in step 211, based on the interference signal received in step 206, for example. The connected base station 100 performs the SIC reception process using the interference control information received in step 211 and the interference control information estimated in step 111 (step 106), and decodes the transmission data (step 107).

### <Operation Example 3>

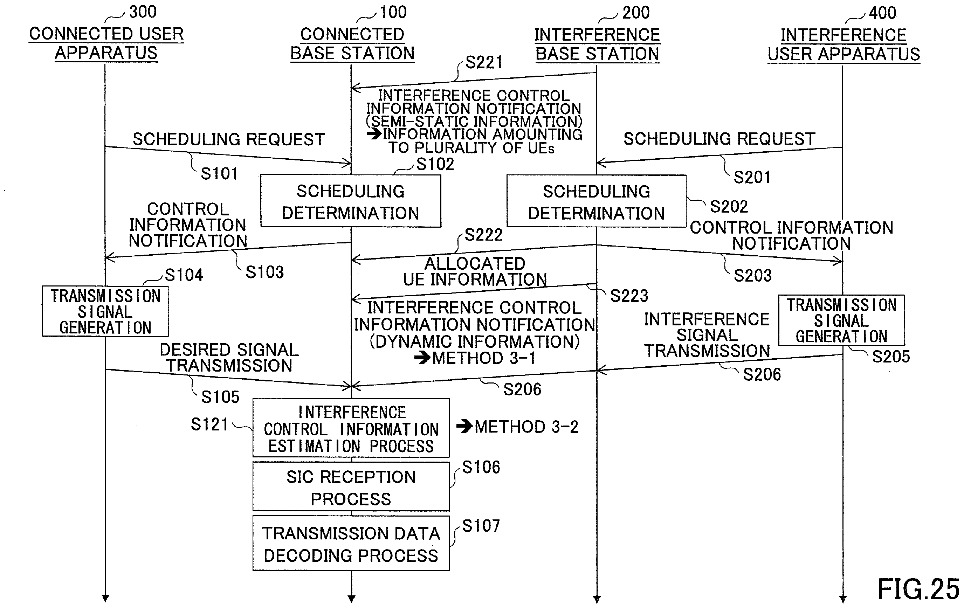

FIG. 25 corresponds to the methods 3-1 and 3-2, and is a sequence diagram for the case in which the set of interference control information of the plurality of UEs is semi-statically notified, and the actual allocated UE information is dynamically notified.

As illustrated in FIG. 25, the interference base station 200 semi-statically transmits a part of the interference control information with respect to the connected base station 100 (step 221). Here, the interference control information that is transmitted is the interference control information related to the plurality of interference user apparatuses.

The connected user apparatus 300 transmits the scheduling request to the connected base station 100 (step 101), and the connected base station 100 determines the scheduling (for example, allocation of the PUSCH) of the connected user apparatus 300, and transmits the control information (for example, the UL grant) to the connected user apparatus 300 (step 103). Hence, the connected user apparatus 300 generates the transmission signal (step 104), and transmits the desired signal (data and the like transmitted by the PUSCH) to the connected base station 100 (step 105).

Similarly on the interference base station 200 end, the interference user apparatus 400 transmits the scheduling request to the interference base station 200 (step 201), and the interference base station 200 determines the scheduling (for example, allocation of the PUSCH) of the interference user apparatus 400, and transmits the control information (for example, the UL grant) to the interference user apparatus 400 (step 203). Hence, the interference user apparatus 400 generates the transmission signal (step 205), and transmits the interference signal (desired signal to the interference base station 200) to the interference base station 200 (step 206). This interference signal arrives at the connected base station 100.

In addition, the interference base station 200, after determining the scheduling, transmits information (for example, C-RNTI that is specific information of each UE, and information indicating the UE to which the PUSCH resource is allocated) of the allocated interference user apparatus to the connected base station 100 (step 222). In addition, in the case in which the operation of the method 3-1 is performed, the interference base station 200 notifies the remainder of the interference control information (dynamic information) to the connected base station 100 (step 223). In the case in which the operation of the method 3-2 is performed, the connected base station 100 estimates the remainder of the interference control information (dynamic information) (step 121).

The connected base station 100 performs the SIC reception process using the interference control information received in step 221, the allocated UE information received in step 222, and the interference control information received in step 223 or estimated in step 121 (step 106), and decodes the transmission data (step 107).

### <Operation Example 4>

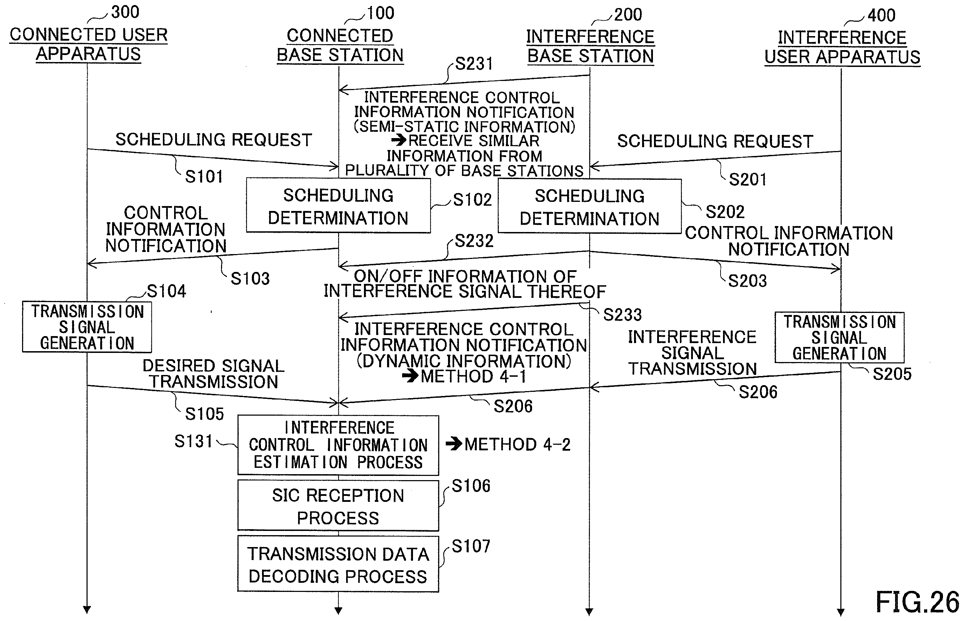

FIG. 26 corresponds to the methods 4-1 and 4-2, and is a sequence diagram for the case in which the set of interference control information related to the plurality of interference base stations is semi-statically notified, and the actual interference generated base station is dynamically notified.

As illustrated in FIG. 26, the plurality of interference base stations including the interference base station 200 and the other interference base stations semi-statically transmit a part of the interference control information with respect to the connected base station 100 (step 231).

The connected user apparatus 300 transmits the scheduling request to the connected base station 100 (step 101), and the connected base station 100 determines the scheduling (for example, allocation of the PUSCH) of the connected user apparatus 300, and transmits the the control information (for example, the UL grant) to the connected user apparatus 300 (step 103). Hence, the connected user apparatus 300 generates the transmission signal (step 104), and transmits the desired signal (data and the like transmitted by the PUSCH) to the connected base station 100 (step 105).

Similarly on the interference base station 200 end, the interference user apparatus 400 transmits the scheduling request to the interference base station 200 (step 201), and the interference base station 200 determines the scheduling (for example, allocation of the PUSCH) of the interference user apparatus 400, and transmits the control information (for example, the UL grant) to the interference user apparatus 400 (step 203). Hence, the interference user apparatus 400 generates the transmission signal (step 205), and transmits the interference signal (desired signal to the interference base station 200) to the interference base station 200 (step 206). This interference signal arrives at the connected base station 100. One or more interference base stations of the plurality of interference base stations perform the operation described above.

In addition, each of the plurality of interference base stations including the interference base station 200, after determining the scheduling, may transmit ON/OFF information (for example, may be explicitly indicated by 1 bit, or implicitly indicated by notification of the dynamic information of the interference signal) which indicates whether the interference signal is generated with respect to the connected base station 100 in a subordinate thereof, to the connected base station 100 (step 232). For example, whether the interference signal with respect to the connected base station 100 is generated may be judged from the scheduling contents of the uplink (for example, it may be judged that interference is generated in a case in which an uplink transmission is allocated to the UE in a vicinity of a cell edge). In addition, in the case in which the operation of the method 4-1 is performed, the interference base station (for example, the interference base station 200) that transmits the ON information in step 232 notifies the remainder of the interference control information (dynamic information) to the connected base station 100 (step 233). In the case in which the operation of the method 4-2 is performed, the connected base station 100 estimates the remainder of the interference control information (dynamic information) with respect to the interference base station (for example, the interference base station 200) that transmits the ON information in step 232 (step 131).

The connected base station 100 performs the SIC reception process using the interference control information received in step 231, the ON/OFF information received in step 232, and the interference control information received in step 233 or estimated in step 131 (step 106), and decodes the transmission data (step 107).

As described above, this embodiment provides an uplink interference reduction method executed in a radio communication system which includes a connected base station, and an interference base station to which an interference user apparatus transmitting an interference signal with respect to the connected base station is connected, including control information transmission step, transmitting to the connected base station by the interference base station, control information used for reducing the interference signal at the connected base station, and interference reduction step reducing, by the connected base station, the interference signal using the control information, to acquire a desired signal transmitted from a user apparatus that is connected to the connected base station.

According to the above configuration, the base station of the radio communication system can appropriately perform the interference reduction process with respect to the interference signal transmitted from the user apparatus of the interference cell.

For example, in the control information transmission step, the interference base station semi-statically transmits a part of the control information to the connected base station, and dynamically transmits a remainder of the control information to the connected base station. According to this configuration, it is possible to reduce the information that is dynamically notified, and reduce a processing load.

In the control information transmission step, the interference base station may semi-statically transmit a part of the control information to the connected base station, and in the interference reduction step, the connected base station may estimate a remainder of the control information, and reduces the interference signal using the part of the control information and the remainder of the control information. According to this configuration, it is possible to reduce the information that is notified, and reduce the processing load of the notification.

In the control information transmission step, the interference base station may transmit a set of control information related to a plurality of interference user apparatuses to the connected base station, and thereafter transmit to the connected base station information of an interference user apparatus to which a resource allocation in an uplink transmission is actually performed, from amongst the plurality of interference user apparatuses. According to this configuration, it is possible to reduce the information that is dynamically transmitted, because the control information is transmitted in advance.

In the control information transmission step, each of a plurality of interference base stations including the interference base station and other interference base stations may transmit control information to the connected base station, and each of the plurality of interference base stations may thereafter transmit to the connected base station information indicating whether an interference will occur in an uplink with respect to the connected base station. According to this configuration, it is also possible to reduce the information that is dynamically transmitted, because the control information is transmitted in advance.

For example, the control information includes sequence information of a demodulation reference signal, as information used for a channel estimation of the interference signal. In this case, the channel estimation of the interference signal becomes possible, and the channel estimation may be used for the interference reduction process.

In the interference reduction step, the control information may further include information required for demodulation of the interference signal, in a case in which the connected base station executes successive interference cancellation. In this case, it is possible to appropriately execute the successive interference cancellation.

In a case in which the interference signal is a signal transmitted by PUSCH, the control information transmitted from the interference base station to the connected base station in the control information transmission step may include information indicting whether a UCI is multiplexed to PUSCH. According to this configuration, it is possible to perform a high-precision interference cancellation that takes into consideration the UCI multiplexing.

Each base station described in this embodiment may include a CPU and a memory, and may have a configuration realized by the CPU (processor) that executes the program. Alternatively, each base station may have a configuration realized by hardware, such as a hardware circuit and the like provided with logic for the described process of this embodiment, or realized by a combination of program and hardware.

Each user apparatus described in this embodiment may include a CPU and a memory, and may have a configuration realized by the CPU (processor) that executes the program. Alternatively, each user apparatus may have a configuration realized by hardware, such as a hardware circuit and the like provided with logic for the described process of this embodiment, or realized by a combination of program and hardware.

The disclosed invention is not limited to each embodiment of the present invention described above, and it may be apparent to those skilled in the art that various variations, modifications, substitutions, replacements, and the like may be made to the embodiment. Specific examples of numerical values are used in the description in order to facilitate understanding of the invention, however, these numerical values are simply illustrative, and any other appropriate values may be used, except where indicated otherwise. Classifications of items (examples) in the above description are not essential to the present invention, and depending on necessity, subject matter described in two or more items may be combined and used, and subject matter described in one item may be applied to subject matter described in another item (unless contradictory). A boundary of functional parts or processors in the functional block diagrams may or may not correspond to a boundary of physical components. An operation by a plurality of functional parts may be physically executed by a single component, or an operation of a single functional part may be physically executed by a plurality of components. For the sake of convenience, the user apparatus and the base station are described using the functional block diagrams. However, these apparatuses may be implemented in hardware, software, or combinations thereof. The software that operates in the processor of the user apparatus and the software that operates in the processor of the base station may be stored in any appropriate storage medium, such as a RAM (Random Access Memory), a flash memory, a ROM (Read Only Memory), an EPROM, an EEPROM, a register, an HDD (Hard Disk Drive), a removable disk, a CD-ROM, a database, a server, and the like. The present invention is not limited to the embodiment described above, and various variations, modifications, alterations, substitutions, replacements, and the like may be made without departing from the scope of the present invention.

The present patent application is based on and claims the benefit of priority of Japanese Patent Application No. 2014-247189 filed on December 5, 2014, and the entire disclosure of the Japanese Patent Application No. 2014-247189 is hereby incorporated by reference.

### DESCRIPTION OF THE REFERENCE NUMERALS

1, 100 Connected Base Station
2, 200 Interference Base Station
10, 300 Connected User Apparatus
11, 400 Interference User Apparatus
21, 31 CP Detector
22, 32 FFT
41 Channel Estimator
42 Interference Canceler
50 First Stage: Interference Signal Detection
51, 61 Signal Detector (IRC2)
52, 62 IDFT
53 Soft Decision Symbol Estimator
60 Second Stage: Desired Signal Detection
63 LLR Calculator
64 Channel Deinterleaver
65 Turbo Decoder
121 Control Information Reception Part
122 Interference Reduction Processor
231 Control Information Generator
232 Control Information Transmission Part
101, 201 Scheduling Information Determination Part
102, 202 Control Information Share Part
103, 203 Cable I/F
104, 204 Transmission Data Reception Part
105, 205 Interference Control Information Estimator
106, 206 Interference Control Information Accumulation Part
107, 207 SIC Part
108, 208 Reception Data Accumulation Part
109, 209 Radio I/F
301, 401 Scheduling Request Part
302, 402 Transmission Control Information Reception Part
303, 403 Transmission Data Accumulation Part
304, 404 Transmission Signal Generator
305, 405 Radio I/F

## Claims

1. An uplink interference reduction method executed in a radio communication system which includes a connected base station, and an interference base station to which an interference user apparatus transmitting an interference signal with respect to the connected base station is connected, comprising:
control information transmission step, transmitting to the connected base station by the interference base station, control information used for reducing the interference signal at the connected base station; and
interference reduction step reducing, by the connected base station, the interference signal using the control information, to acquire a desired signal transmitted from a user apparatus that is connected to the connected base station.

2. The uplink interference reduction method as claimed in claim 1, wherein, in the control information transmission step, the interference base station semi-statically transmits a part of the control information to the connected base station, and dynamically transmits a remainder of the control information to the connected base station.

3. The uplink interference reduction method as claimed in claim 1, wherein,
in the control information transmission step, the interference base station semi-statically transmits a part of the control information to the connected base station, and
in the interference reduction step, the connected base station estimates a remainder of the control information, and reduces the interference signal using the part of the control information and the remainder of the control information.

4. The uplink interference reduction method as claimed in any of claims 1 to 3, wherein, in the control information transmission step, the interference base station transmits a set of control information related to a plurality of interference user apparatuses to the connected base station, and thereafter transmits to the connected base station information of an interference user apparatus to which a resource allocation in an uplink transmission is actually performed, from amongst the plurality of interference user apparatuses.

5. The uplink interference reduction method as claimed in any of claims 1 to 3, wherein, in the control information transmission step, each of a plurality of interference base stations including the interference base station and other interference base stations transmits control information to the connected base station, and each of the plurality of interference base stations thereafter transmits to the connected base station information indicating whether an interference will occur in an uplink with respect to the connected base station.

6. The uplink interference reduction method as claimed in any of claims 1 to 5, wherein the control information includes sequence information of a demodulation reference signal, as information used for a channel estimation of the interference signal.

7. The uplink interference reduction method as claimed in claim 6, wherein, in the interference reduction step, the control information further includes information required for demodulation of the interference signal, in a case in which the connected base station executes successive interference cancellation.

8. The uplink interference reduction method as claimed in any of claims 1 to 7, wherein, in a case in which the interference signal is a signal transmitted by PUSCH, the control information transmitted from the interference base station to the connected base station in the control information transmission step includes information indicating whether a UCI is multiplexed to PUSCH.

9. A base station used as a connected base station in a radio communication system which includes the connected base station, and an interference base station to which an interference user apparatus transmitting an interference signal with respect to the connected base station is connected, comprising:
a control information reception part that receives, from the interference base station, control information used for reducing the interference signal at the connected base station; and
an interference reduction processor that reduces the interference signal using the control information, to acquire a desired signal transmitted from a user apparatus that is connected to the connected base station.
